## Europäisches Patentamt
## European Patent Office
## Office européen des brevets

(11) Numéro de publication: **0 180 682**
**A1**

## (12) DEMANDE DE BREVET EUROPEEN

(21) Numéro de dépôt: **84440067.1**

(22) Date de dépôt: **07.12.84**

(51) Int. Cl.⁴: **C 08 F 2/44**
**A 01 N 25/10, C 08 F 20/56**

(30) Priorité: **09.11.84 FR 8417227**

(43) Date de publication de la demande:
**14.05.86 Bulletin 86/20**

(84) Etats contractants désignés:
**AT BE CH DE GB IT LI LU NL SE**

(71) Demandeur: **LEON BECK S.A.**
**2 bis route d'Oberhausbergen**
**F-67037 Strasbourg(FR)**

(72) Inventeur: **Pekmez, Paul**
**4 route d'Oberhausbergen**
**F-67037 Strasbourg Cedex(FR)**

(74) Mandataire: **Bossard, Jacques-René**
**CABINET ARBOUSSE BASTIDE 20 rue de Copenhague**
**F-67000 Strasbourg(FR)**

(54) **Perfectionnements aux produits pour le traitement des sols.**

(57) Polyacrylamides, polymères et copolymères, caractérisés en ce que leur structure moléculaire est modifiée par introduction au moment de leur polymérisation, d'au moins un composé chimique possédant la propriété d'exercer sur les sols, les cultures qu'ils portent et/ou leur environnement immédiat, des effets protecteurs contre les pollutions de toute origine et de toute nature.

EP 0 180 682 A1

PERFECTIONNEMENTS AUX PRODUITS POUR LE TRAITEMENT
DES SOLS.

La présente invention concerne un procédé
pour l'introduction et la libération progressive
dans le sol de différents adjuvants contribuant à
l'agrément des cultures pratiquées dans ce sol et/ou
à leur protection contre les effets des parasites ou
des polluants de toutes origines.

Les propriétés hydrophiles des polyacrylamides et de leurs dérivés (homopolymères et copolymères avec par exemple l'acide polyacrylique, et
copolymères réticulés avec divers autres monomères)
sont largement connues, et font l'objet de nombreuses
applications.

Parmi ces applications, on peut mentionner
les produits consistant dans une forme granulée de
ces polymères, qui, mélangés aux sols avec éventuellement des oligoéléments, confèrent à ceux-ci la
double propriété de rétention de l'humidité, qu'elle
provienne des pluies ou de l'arrosage artificiel, et
d'une expansion assurant leur aération, au moment de
leur rétraction.

Ces produits granulés sont commercialisés
avec succès sous la marque commerciale "GRAIN D'EAU"
par la Déposante.

Leur application est cependant limitée à
l'amélioration des propriétés physico-mécaniques des
sols, sans modifier leurs propriétés biologiques intrinsèques ni a fortiori celles des cultures qu'ils portent. En d'autres termes il demeure actuellement nécessaire de traiter ces cultures et/ou ces sols avec les adjuvants appropriés pour leur conférer aussi bien des facteurs d'agrément additionnels que des moyens de protection contre les divers facteurs de pollution ou de parasitage, tels que insecticides, fongicides, agents herbicides spécifiques, agents de répulsion contre les chiens et chats, etc...

La présente invention vise à combler cette lacune. A cet effet elle concerne une nouvelle catégorie de polyacrylamides (y compris les dérivés évoqués plus haut) possédant la propriété structurale d'être associés à des agents, de nature et d'applications spécifiques connues par ailleurs, et permettant à ces agents d'être introduits dans les sols pour y être répartis de manière homogène et libérés progressivement sur une période de temps prolongée, de manière à y exercer efficacement tous leurs effets.

Il convient de noter que l'invention ne vise nullement une simple association par mélangeage des granulés connus de polyacrylamides avec ces agents, mais bien une nouvelle structure chimique de ces granulés, créée par l'introduction des proportions voulues des composés chimiques jouant le rôle de divers adjuvants, précisé ci-après au cours de la réaction de polymérisation et/ou de réticulation conduisant aux polymères hydrophiles.

L'invention vise donc, essentiellement :

- En premier lieu des granulés de polyacrylamide ou de leurs dérivés copolymères simples et/ou récitulés, contenant dans leur structure moléculaire de 10 à 50 % en poids de composés chimiques possédant des propriétés adjuvantes s'exerçant sur les sols et/ou les cultures qu'ils portent, ces effets étant répartis sur une longue période de temps après introduction desdits granulés dans le sol.

- En second lieu un procédé pour l'obtention sur les sols et les cultures qu'ils portent, d'effets protecteurs contre les pollutions de toute origine et de toute nature, ces effets s'exerçant sur une période de temps prolongée, ce procédé consistant à introduire dans les sols des granulés tels que définis ci-dessus.

Pour illustrer les différents effets que l'on peut obtenir grâce à l'ivention, on peut se reporter aux différents types de pollution des sols et des cultures :

- En premier lieu, on peut chercher à atténuer ou compenser les mauvaises odeurs des sols chargés par exemple d'engrais, ou à rehausser les odeurs agréables ou les parfums des cultures, notamment des fleurs.

Dans cette hypothèse, les adjuvants introduits sont des produits odoriférants ou désodorants, solides ou liquides, tels que des essences naturelles ou artificielles solubles et absorbables, qui participent à la structure moléculaire des polyacrylamides par addition au moment de leur polymérisation, et qui sont ensuite libérés progressivement dans le sol jusqu'à la surface où ils diffusent dans l'atmosphère, cette diffusion étant au surplus favorisée par la propriété d'aération développée dans le sol par les "GRAINS D'EAU".

- En second lieu, on peut chercher à lutter contre les parasites animaux ou végétaux qui infestent les sols et les cultures. Pour cela, on introduit dans la structure des polyacrylamides, au moment de leur polymérisation, des agents insecticides, bactéricides, fongicides, herbicides spécifiques et analogues qui quitteront progressivement cette structure dans le sol et exerceront leur action protectrice par diffusion pendant une durée prolongée dans tout le volume de sol auquel les "GRAINS D'EAU" auront été associés et mélangés.

- En troisième lieu, à l'inverse de la première application, on peut chercher à créer une action de répulsion vis à vis des animaux domestiques, notamment les chiens et les chats, pour éviter qu'ils ne viennent polluer les cultures par leurs excréments , ou simplement les piétiner. Là encore, les agents appropriés sont introduits dans les polyacrylamides au moment de leur polymérisation, et libérés dans le sol par les "GRAINS D'EAU".

- Plus généralement, l'invention vise l'introduction dans la structure des polyacrylamides, au moment de leur polymérisation, de tout agent destiné à modifier les propriétés biologiques des sols et/ou des cultures et de leur environnement, et agent étant libéré progressivement après mélange des polyacrylamides avec le sol.

On notera que la forme physique particulière sous laquelle les polyacrylamides sont intégrées au sol n'est pas limitée à la forme granulée dite "GRAIN D'EAU" précitée, mais peut par exemple être la forme micronisée permettant l'application des polyacrylamides par saupoudrage ou aspersion d'une suspension, comme il est décrit dans la demande de brevet déposée le 31 Octobre 1984, pour "Produits gonflants et réteteurs d'humidité à base polyacrylamides micronisées", permettant l'application à des terrains déjà cultivés.

De même les adjuvants visés dans la présente invention ne sont pas limités, en nature et en application, à ceux énumérés dans la description qui précède, dès lors qu'ils contribuent à modifier une ou plusieurs propriétés des sols, des cultures qu'ils portent et/ou de leur environnement immédiat.

REVENDICATIONS

1.      Polyacrylamides, polymères et copolymères, caractérisés en ce que leur structure moléculaire est modifiée par introduction au moment de leur polymérisation, d'au moins un composé chimique possédant la propriété d'exercer sur les sols, les cultures qu'ils portent et/ou leur environnement immédiat, des effets protecteurs contre les pollutions de toute origine et de toute nature.

2.      Polymères et copolymères selon la revendication 1, caractérisés en ce qu'ils se présentent sous forme de granulés destinés à être mélangés à la terre, lesdits composés chimiques exerçant leur effet pendant un temps prolongé après ce mélangeage.

3.      Polymères et copolymères selon la revendication 1, caractérisé en ce qu'ils se présentent sous forme micronisée destinée à être saupoudrée à l'état sec ou arrosée à l'état de suspension sur des terrains déjà cultivés, lesdits composés chimiques exerçant leurs effets pendant un temps prolongé après ce saupoudrage ou cet arrosage.

4.      Polymères et copolymères selon l'une quelconque des revendications 1 à 3, caractérisés en ce que lesdits composés chimiques sont choisis parmi les produits solides et liquides possédant des propriétés insecticides, bactéricides, fongicides, herbicides, répulsives vis à vis des animaux domestiques, odoriférants, désodorants et analogues, atténuant et/ou compensant les pollutions de toutes natures.

5.      Procédé pour l'obtention, sur les sols et les cultures qu'ils portent, d'effets protecteurs contre les pollutions de toute nature et de toute origine, ces effets s'exerçant sur une période de temps prolongée, procédé caractérisé en ce qu'il consiste à introduire dans le sol des polyacrylamides polymères et copolymères selon l'une quelconque des revendications 1 à 5.

Office européen
des brevets

**RAPPORT DE RECHERCHE EUROPEENNE**

**0180682**
Numéro de la demande

EP 84 44 0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | GB-A-2 129 302 (CHEMICAL DISCOVERIES)<br>* Revendication 1; exemple 1; page 2, colonne 1, lignes 37-41 *<br><br>----- | 1-5 | C 08 F 2/44<br>A 01 N 25/10<br>C 08 F 20/56 |

DOMAINES TECHNIQUES
RECHERCHES (Int Cl.4)

C 08 F
A 01 N

Le présent rapport de recherche a été établi pour toutes les revendications

| Lieu de la recherche | Date d'achevement de la recherche | Examinateur |
|---|---|---|
| LA HAYE | 15-07-1985 | CAUWENBERG C.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82